(19)

Europäisches
Patentamt
European
Patent Office
Office européen
des brevets

(11) **EP 2 090 969 A1**

(12) **EUROPEAN PATENT APPLICATION**
published in accordance with Art. 153(4) EPC

(43) Date of publication:
**19.08.2009 Bulletin 2009/34**

(51) Int Cl.:
***G06F 3/048*** (2006.01)     ***G06F 3/14*** (2006.01)

(21) Application number: **07832071.0**

(22) Date of filing: **19.11.2007**

(86) International application number:
**PCT/JP2007/072341**

(87) International publication number:
**WO 2008/065917 (05.06.2008 Gazette 2008/23)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **30.11.2006 JP 2006323353**

(71) Applicant: **NEC Corporation
Minato-ku
Tokyo 108-8001 (JP)**

(72) Inventor: **SATOU, Masayuki
Minato-ku
Tokyo 108-8001 (JP)**

(74) Representative: **Betten & Resch
Patentanwälte
Theatinerstrasse 8
(Fünf Höfe)
80333 München (DE)**

(54) **INFORMATION SELECTION SUPPORT DEVICE, INFORMATION SELECTION SUPPORT METHOD, AND PROGRAM**

(57)     Information selected by a user and number of selection times thereof are registered in pair in a selection-candidate list storage section (141). A selection-candidate presenting means (11) displays on a display section (22) the information registered in the selection-candidate-list storage section (141) in the descending order of the number of selection times. A list management means (12) performs an update processing that increments the number of selection times of the selected information, if the information is selected by the user. The list management means (12) decrements all the number of selection times registered in the selection-candidate-list storage section (141) upon occurring of a decrement timing of the number of selection times.

FIG. 1

EP 2 090 969 A1

**Description**

TECHNICAL FIELD

The present invention relates to an information-selection assist technique that presents a plurality of pieces of information, which a user can select, to the user in a descending order of the possibility of selection based on the number of selection times.

BACKGROUND ART

A user selects personal data from an address book in a portable telephone, or selects a graphics file which the user wishes to browse from a plurality of graphics files registered in a personal computer. If there are a large number of selectable information when the user is to select the needed information out of a plurality of pieces of information, a longer time is needed for the information selection.

In order to solve the above-described problem, there is a known technique that presents a plurality of pieces of information, which the user can select, to the user in the descending order of number of selection times (for example, refer to Patent Publication-1). The technique described in this Patent Publication-1 includes a storage unit in which the number of selection times is stored for each piece of the information which the user can select, and increments the number of selection times each time the user selects the information. Then, upon presentation to the user, information is presented to the user in the descending order of the number of selection times.

Patent Publication-1: JP-1997-81357A

Since the information for which the number of selection times is larger is said to be the information having a higher possibility of selection by the user, presentation of the information to the user in the descending order of the number of selection times can reduce the time length needed for the user to select the information.

However, the information for which the number of selection times is larger is not necessarily the information having a larger possibility of selection by the user. For example, the information which is not selected for a long period of time has a lower possibility of selection by the user even if the number of selection times is larger. More specifically, the information which was frequently selected in the past and yet has been scarcely selected recently has a lower possibility of selection by the user. Since the conventional technique described in Patent Publication-1 does not take at all such a point into consideration however, the information having a lower possibility of selection by the user is placed ahead in the presentation order, whereby there arises the problem that it sometimes takes a longer time for the user to select the needed information.

In order for solving the above-described problem, it may be considered that history information including the information selected by the user as well as the selection time and date thereof is registered in a storage unit each time the user selects the information, for example, and upon presenting information to the user, the information is presented in the descending order of number of selection times by the user, by obtaining the number of selection times for each piece of information over the past specific period of time based on the history information registered in the storage unit. However, there arises another problem in that this technique requires a larger storage capacity.

SUMMARY OF THE INVENTION

Thus, it is an object of the present invention to present information in the presentation order wherein the information not selected for a long period of time is placed behind, even if the information is selected frequently in the past, without using a large storage capacity.

The present invention provides, in a first aspect thereof, an information-selection assist system comprising: a selection-candidate list registering therein information selected by a user and a number of selection times of the information in pair; a list management means that updates said selection candidate list when the information is selected by the user, and decrements each number of selection times registered in said selection-candidate list upon occurring of a decrement timing of the number of selection times; and a selection-candidate presenting means that presents the information registered tin said selection-candidate list in a descending order of the number of selection times.

The present invention provides, in a second aspect thereof, an information-selection assist system including: a selection-candidate list that is capable of registering therein a specified number of pairs each including information selected by a user and a number of selection times of the information; a list management means that updates the selection-candidate list depending on necessity thereof when the information is selected by the user, and decrements each number of selection times registered in the selection-candidate list upon occurring of a decrement timing of the number of selection times; and a selection-candidate presenting means that presents the information registered in the selection-candidate list in a descending order of the number of selection times.

The present invention provides, tin a third aspect thereof, an information-selection assist method including:

providing a selection-candidate list registering therein information selected by a user and a number of selection times of the selected information in pair; a list management means updating the selection-candidate list when information is selected by the user, and decrementing each number of selection times registered in the selection-candidate list; a selection-candidate presenting means presenting the information registered in the selection-candidate list in a descending order of the number of selection times.

The present invention provides, in a fourth aspect thereof, an information-selection assist method including: providing a selection-candidate list that is capable of registering therein information selected by a user and a number of selection times of the selected information in pair; a list management means updating the selection-candidate list depending on necessity thereof when the information is selected by the user, and decrementing each number of selection times registered in the selection-candidate list upon occurring of a decrement timing of the number on selection times; and a selection-candidate presenting means presenting the information registered in the selection-candidate list in a descending order of the number of selection times.

The present invention provides, in a fifth aspect thereof, a program that causes a computer including a selection-candidate list registering information selected by a user and a number of selection times of the selected information in pair, to function as: a list management means that updates the selection - candidate list when the information is selected by the user, and decrements each number of selection times registered in the selection-candidate list upon occurring of a decrement timing of the number of selection times; and a selection-candidate presenting means that presents the information registered in the selection-candidate list in a descending order of the number of selection times.

The present invention provides, in a sixth aspect thereof, a program that causes a computer including a selection-candidate list registering information selected by a user and a number of selection times of the selected information in pair, to function as: a list management means that updates the selection-candidate list depending on necessity thereof when the information is selected by the user, and decrements each number of selection times registered in the selection-candidate list upon occurring of a decrement timing of the number of selection times; and a selection-candidate presenting means that presents the information registered in the selection-candidate list in a. descending order of the number of selection times.

The above and other objects, features and advantages of the present invention will be more apparent from the following description, referring to the drawings.

BRIEF DESCRIPTION OF THE DRAWING

FIG. 1 is a block diagram exemplifying the configuration of an information-selection assist system according to an embodiment of the present invention.

FIG. 2 is a table exemplifying the contents of selection-candidate list storage section 141.

FIG. 3 is a flowchart exemplifying the processing according to the embodiment.

FIG. 4 is s a flowchart exemplifying the detailed processing of the first update processing conducted in step S35 in FIG. 3.

FIG. 5 is a flowchart exemplifying the detailed processing of the second update processing conducted in step S37 in FIG. 3.

FIG. 6 is a diagram showing an example of the selected-information list screen 61.

FIG. 7 is a table exemplifying the contents of selection-candidate-list storage section 141a used by another embodiment of the present invention.

BEST MODE OF CARRYING OUT THE INVENTION

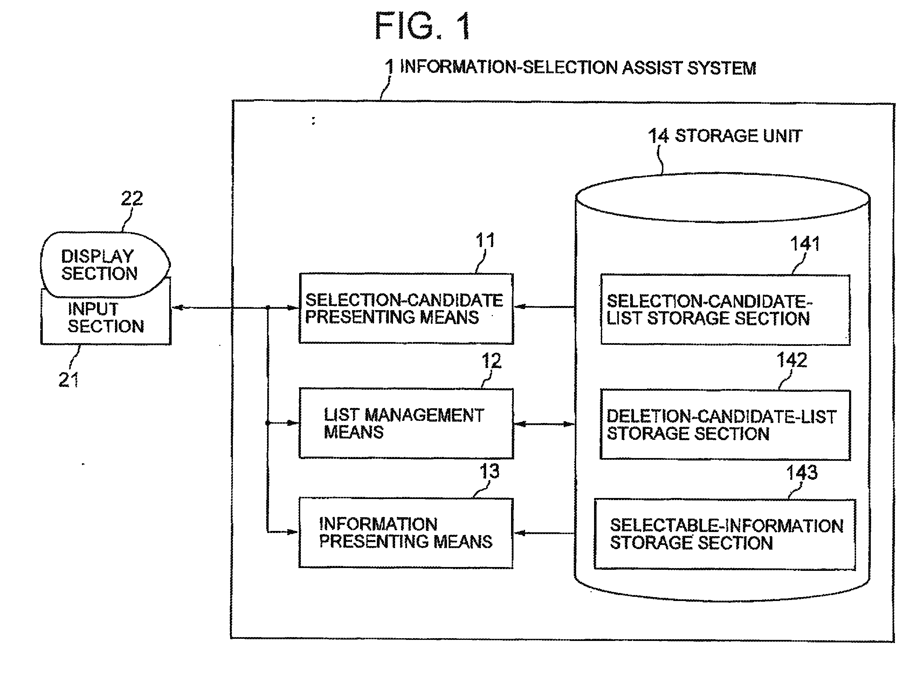

Next, an exemplified embodiment of the present invention is described in detail with reference to drawing. FIG. 1 is a block diagram exemplifying an information-selection assist system according to an embodiment of the present invention. With reference to the same figure, the information-selection assist system 1 includes presenting means 11, list management means 12, information presenting means 13, and a storage unit 14. An input section 21, such as a keyboard or a mouse, and a display section 22, such as a LED, are connected to the information-selection assist system 1.

The storage unit 14 includes a selection-candidate-list storage section 141, a deletion-candidate-list storage section 142, and a selectable-information storage section 143. A plurality of (M) pieces of user-selectable information are registered in the selectable-information storage section 143. An index (file name, management ID etc.) that uniquely identifies the piece of information is attached to each piece of information. The selection-candidate-list storage section 141 uses in pair an index that specifies the information selected by the user, and the number of selection times of the information that is specified by the index, as the registered element thereof, and has a storage capacity that allows registration of N registered elements (N<M).

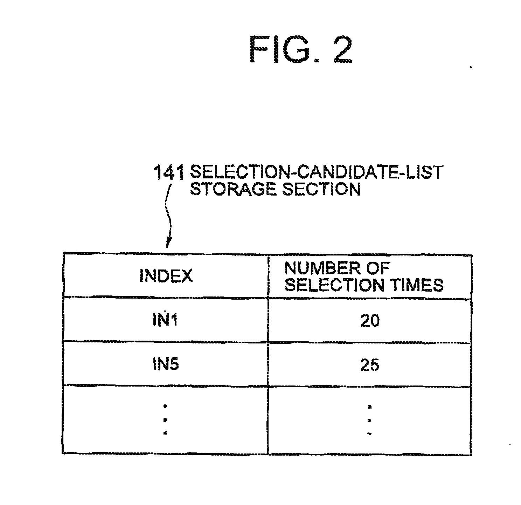

FIG. 2 exemplifies the contents of selection-candidate-list storage section 141. The example shown in the same figure illustrates that the numbers of times of selection of the information specified by indexes IN1 and IN5 are 20 times and 25 times, respectively.

The deletion-candidate-list storage section 142 uses a pair including the index and number of selection times as a registered element, and registers therein the registered elements (registered elements serving as deletion candidates) that allow deletion from the selection-candidate-list storage section 141. The selection-candidate presenting means 11 has a function of displaying the indexes registered in the selection-candidate-list storage section 141 on the display section 22 in the descending order of the number of selection times.

The list management means 12 has the following functions (1) - (3).

(1) It increments the number of selection times that is paired with the index, if the index that specifies the information selected by the user is registered in the selection-candidate-list storage section 141. Moreover, it obtains the selection probability, p, of each piece of information specified by each element registered in the selection-candidate-list storage section 141. If there exists information having a selection probability p that is less than a predetermined threshold, $\mu$, it performs the processing (deletion-candidate registration processing) of registering (copying) the element corresponding to the information into the deletion-candidate-list storage section 142. Here, the selection probability p of the information specified by the element registered in the selection-candidate-list storage section 141 is expressed by:

$$p = (\text{number of selection times of the information for which the selection probability is to be obtained}) / (\text{total value of the number selection times registered in the selection-candidate-list storage section 141}).$$

The threshold $\mu$ is a variable parameter representing the degree of registration possibility that the element registered in the selection-candidate-list storage section 141 is also registered in the deletion-candidate-list storage section 142. A larger value of the threshold $\mu$ means that the element included in the selection-candidate-list storage section 141 is more likely to be registered in the deletion-candidate-list storage section 142. As the threshold $\mu$, for example, around the value expressed by:

$$\mu = (1/N) \times 0.6$$

can be employed.

(2) If the index that specifies the information selected by the user is not registered in the selection-candidate-list storage section 141 and if the selection-candidate-list storage section 141 has a space therefor, it additionally register the index that specifies the information selected by the user and the initial value of the selection times in pair in the selection-candidate-list storage section 141. Moreover, it also performs the above-described deletion-candidate registration processing.

(1) If the index that specifies the information selected by the user is not registered in the selection-candidate-list storage section 141, and if the selection-candidate-list storage section 141 is full, it replaces the element having a least number of selection times among the elements registered in the selection-candidate-list storage section 141 with the element including the index that specifies the information selected by the user and the initial value of the number of selection times, under the condition that some of the element is registered in the deletion-candidate-list storage section 142. It also performs the deletion-candidate registration processing as described above.

The information presenting means 13 has the function of reading the information selected by the user from the storage section 143, and displaying the same on the display section 22.

The information-selection assist system 1 having the above-described function can be realized by a computer, and if it is realized by the computer, the following configuration may be employed, for example. A disc, semiconductor memory or other storage unit is prepared on which a program for operating the computer as the information-selection assist system 1, whereby the computer is allowed to read the program. The computer realizes the selection-candidate presenting means 11, list management means 12 and information presenting means 13 on the own computer, by controlling the operation of itself in accordance with the program thus read.

Next, operation of the present embodiment will be described in detail. The user is to select the information that the user wishes to use from among the M pieces of information, registered in the selectable-information storage section 143, the user inputs a selection-candidate display request to the information-selection assist system 1 from the input section 21.

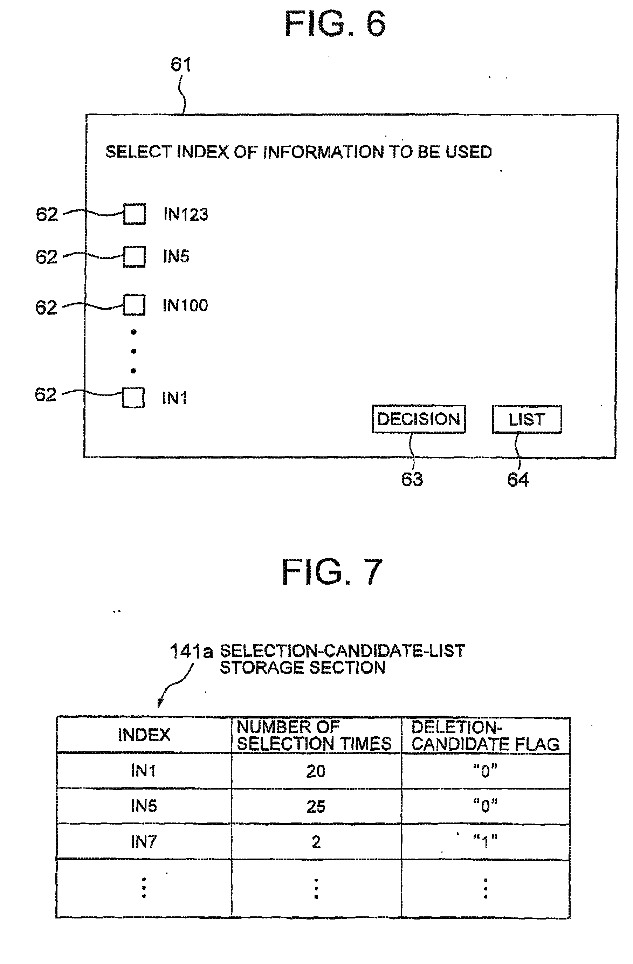

The selection-candidate presenting means 11 in the information-selection assist system 1 creates selection-information-list screen 61 wherein the indexes registered in the selection-candidate-list storage section 141 are arranged in the descending order of the number of selection times, to display the same on the display section 22 (step S31). FIG. 6 is a diagram showing an example of the selection-information-list screen 61, wherein N indexes are arranged in the descending order of the number of selection times. In addition, N selection columns 62 for selecting the index, a decision button 63, and a list button 64 f are provided on the selection-information-list screen 61.

If the index of the information that the user wishes to use is displayed on the selection-information-list screen 61, the user operates the decision button 63, after checking the selection column corresponding to that index (step S32). If the index of the information that the user wishes to use is not displayed on the selection-information-list screen 61, the user operates the list button 64. Thereby, the selection-candidate presenting means 11 displays the list of the indexes of the information registered in the selectable-information storage section 143 on the display section 22, and allows the user to select the information to be used.

If the user selects information, the information presenting means 13 reads the information selected by the user from the selectable-information storage section 143, to display the same on the display section 22. The list management means 12, upon selection of the information by the user, judges whether or not the index of the information selected by the user is registered with reference to the selection-candidate-list storage section 141 (step S33, S34). If the index of the information selected by the user is registered in the selection-candidate-list storage section 141 (NO in step S34), a first update processing is performed (step S35).

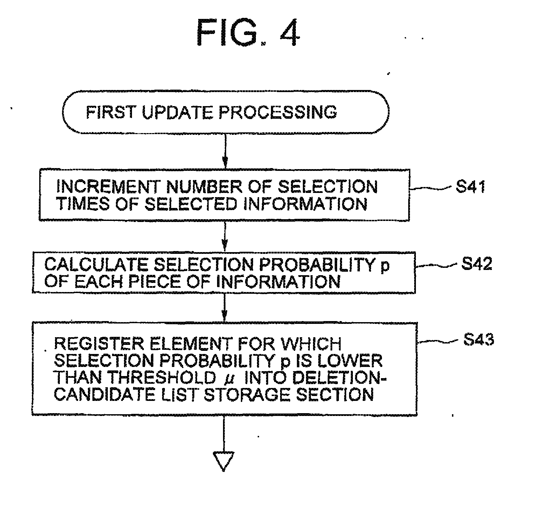

The first update processing performed in step S35 will be described in detail with reference to FIG. 4. The list management means 12 first increment the number of selection times registered in association with the index of the information selected by the user among the numbers of selection times registered in the selection-candidate-list storage section 141 (step S41). In the present embodiment, the number of selection times is incremented by +1. Next, the selection probability p of each piece of information for which the index is registered in the selection-candidate-list storage section 141 is calculated (step S42). If there exists the information for which the selection probability p is less than the predetermined threshold $\mu$, the information and the corresponding element (index and number of selection times in pair) are registered in the deletion-candidate-list storage section 142 (step S43). The above is the detail of the first update processing performed in step S35. When the processing of step S35 is completed, the list management means 12 terminates the processing.

On the other hand, if the index of the information selected by the user is not registered in the selection-candidate-list storage section 141 (NO in step S34), the list management means 12 judges whether or not is necessary to update the selection-candidate-list storage section 141 (step S36). More concretely, if there is no element in the deletion-candidate-list storage section 142, and if the number of elements registered in the selection-candidate-list storage section 141 is N, it is judged that the update is not needed, and otherwise it is judged that the update is needed.

If it is judged that the update is not needed (NO in step S36), the list management means 12 terminates the processing. On the other hand, if it is judged that the update is needed (YES in step S36), a second update processing is performed (step S37).

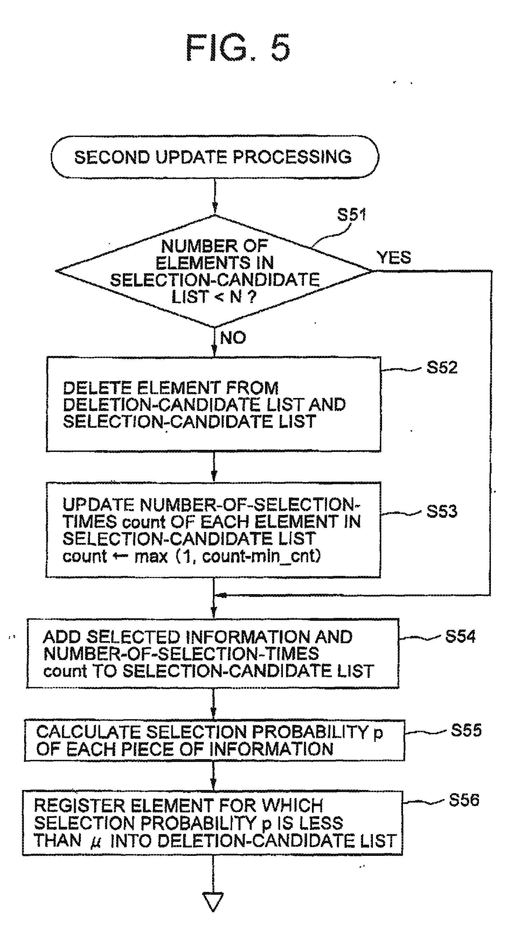

With reference to FIG. 5, the second update processing performed in step S37 will be described in detail. First, the list management section 12 examines whether or not the number of elements registered in the selection-candidate-list storage section 141 is less than N, to thereby investigate whether or not there is a space in the selection-candidate-list storage section 141 (step S51).

If there is a space (YES in step S51), the index that specifies the information selected by the user and the initial value $\lambda$ ($\lambda = 1$, for example) of the number of selection times in pair are added to the selection-candidate-list storage section 141 (step S54). Thereafter, the selection probability p of each information for which the index is registered in the selection-candidate-list storage section 141 is calculated (step S55). If there exists information for which the selection probability p is less than the predetermined threshold $\mu$, the element corresponding to this information is registered in the deletion-candidate-list storage section 142 (step S56).

On the other hand, if the selection-candidate-list storage section 141 is full (NO in step S51), the element registered in the deletion-candidate-list storage section 142 and having a least number of selection times is deleted from the deletion-candidate-list storage section 142, and the same element (element having the same index) is deleted also from the selection-candidate-list storage section 141 (step S52). At this stage, if there exist a plurality of elements having the least number-of-selection-times min_cnt, one of the elements is selected at random, to delete the same.

Subsequently, the least number-of-selection-times min_cnt is subtracted from the number of selection times of each element registered in the selection-candidate-list storage section 141 (step S53). If there exists an element having a number-of-selection-times, count, which is set at "0" after this processing, the number-of-selection-times of this element is updated to "1". Since the subtrahend is the least number of the selection times, it is unlikely that the number of selection times in the selection of selection-candidate-list storage section 141 overflows. Thereafter, the list management means 12 performs the processing of steps S54-S56 as described before.

[Example]

Next, an example of the present embodiment will be described while exemplifying the case where the selection of mail address upon issuing an e-mail is performed.

In the present example, mail addresses in number of M are registered in the selectable-information storage section 143 as the information that the user can select. In the present example, M= 100. It is also assumed that a unique management ID is attached to each mail address.

In the present example, the management ID of the mail address and the number of selection times of the mail address specified by management ID in pair are registered in the selection-candidate-list storage section 141 as an registered element. In the present example, it is assumed that the maximum number N of the elements that can be registered in the selection-candidate-list storage section 141 is "20".

The initial value $\lambda$ of the number of selection times registered in the selection-candidate-list storage section 141 in step S54 in FIG. 5 is set at "1". The threshold $\mu$ to be used in step S43 in FIG. 4 or step S56 in FIG. 5 is set at $\mu=(1/N) \times 0.6=0.03$.

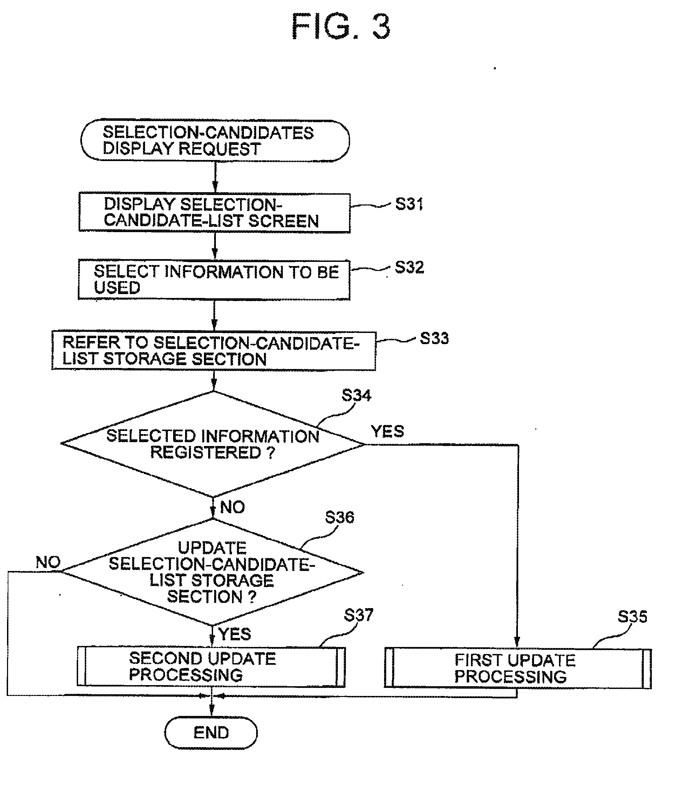

When the user first selects a destination mail address for transmitting a mail in the initial state where there is no registered element in the selection-candidate-list storage section 141 (step S32 in FIG. 3), a pair including the management ID of the mail address and the initial value $\mu=1$ of the number of selection times is stored in the selection-candidate-list storage section 141 (step S33, NO in S34, S 37, and YES in step S51, S54 in FIG. 5).

When the user selects the mail address for which the management ID is already registered in the selection-candidate-list storage section 141 in the state where the number of elements registered in the selection-candidate-list storage section 141 is less than N, the number of selection times registered in association with the above management ID is incremented (step S32, YES in S34, S35 in FIG. 3, and step S41 in FIG. 4).

When the user selects the mail address for which the management ID is not registered in the selection-candidate-list storage section 141 in the state where the number of elements registered in the selection-candidate-list storage section 141 is less than N, the management ID of the mail address selected by the user and the initial value $\mu$ of the number of selection times in pair are additionally registered in the selection-candidate-list storage section 141 (step S32, NO in S34, and S37 in FIG. 3, and YES in step S51, and S54 in FIG. 5).

When the user selects the mail address for which the management ID is not registered in the selection-candidate-list storage section 141 in the state where the number of elements registered in the selection-candidate-list storage section 141 is equal to N, a processing of judgment is performed as to whether or not the newly selected mail address is to be registered in the selection-candidate-list storage section 141 (step S32, NO in step S34, and S36 in FIG.3).

In step S36 in FIG. 3, it is judged whether or not the newly selected mail address is to be registered in the selection-candidate-list storage section 141 based on whether or not the element is registered in the deletion-candidate-list storage section 142.

Here, in the present example, the element corresponding to the information for which the selection probability p is less than the threshold $\mu=(1/20) \times 0.6=0.03$ is stored in the deletion-candidate-list storage section 142. If the element is registered in the deletion-candidate-list storage section 142, means that the element corresponding to the information, that is selected at a rate of less than 3% is registered in the selection-candidate-list storage section 141. The fact that the element is registered in the deletion-candidate-list storage section 142 means that the element corresponding to the information that is not likely selected is registered in the deletion-candidate-list storage section 142. Thus, it is judged that it is needed to register the mail address newly selected by the user in the selection-candidate-list storage section 141 (YES tin step S36), and the element corresponding to the information for which the selection probability p registered in the selection-candidate-list storage section 141 is small is exchanged for the element including the management ID selected by the user and the initial value $\mu$ of the number of selection times (step S37, NO in step S51, and S52 in FIG. 5). Upon exchanging, assuming that the number of selection times of the mail address deleted from the deletion-candidate-list storage section 142 (it means "deleted simultaneously from the selection-candidate-list storage section 141") is 20 (=min_cnt), "20" is subtracted from the number of selection times of all the elements registered in the selection-candidate-list storage section 141 is carried out (step S53).

According to the present embodiment, the information that is selected frequently in the past and yet scarcely selected thereafter for a long period of time can be placed behind in the order of presentation, without using a larger storage capacity. This is because there are provided the selection-candidate-list storage section 141 for storing the pair including the information selected by the user and the number of selection times, and the list management means 12 that updates the selection-candidate-list storage section 141 when information is selected by the user and decrements each number of the selection times stored in the selection-candidate-list storage section 141 when a decrement timing for the number of selection times occurs.

Although the initial value $\lambda$ of the number of selection times used in step S54 in FIG. 5 is set at "1" and the threshold $\mu$ used in step S43 in FIG. 4 and in step S56 in FIG. 5 is set at $\mu = (1/N) \times 0.6$, other setting values may be used.

A larger value for the initial value $\mu$ of the number of selection times allows the elements newly stored in the selection-candidate-list storage section 141 to exist in the selection-candidate-list storage section 141 for a longer period of time.

The threshold $\mu$ is a value satisfying $\mu = a \times (1/N)$ where $0 < a < 1$, whereby a smaller value of "a" allows the selection-candidate-list storage section 141 to be unchanged more likely. As to the initial value $\lambda$ and threshold $\mu$ of the number of selection times, even if optimisation is performed depending on the usage of item selection, they are in the scope of the present invention.

An arbitrary element registered in the selection-candidate-list storage section 141 can be also deleted based on a direct request from the user. If a request that an element in the selection-candidate-list storage section 141 be deleted is input from the input section 21, the list management means 12 in the information-selection assist system 1 deletes the element for which the deletion is requested from the selection-candidate-list storage section 141. In addition, the list management means 12 calculates selection probability p of each piece of information corresponding to the element registered in the selection-candidate-list storage section 141. If an element corresponding to the information for which the selection probability p is less than the threshold $\mu$ is registered in the selection-candidate-list storage section 141, the element is registered (copied) in the deletion-candidate-list storage section 142.

The decrement processing of the number of selection times is performed (step S53) in the above embodiment only when it is judged that there is no space in the selection-candidate-list storage section 141 during the second update processing performed in step S37 in FIG. 3 (NO in step S51 in FIG. 5). However, the decrement processing of the number of selection times may be performed in the first update processing in step S35 in FIG. 3. Further, the decrement processing of the number of selection times may also be performed when the judgment result in step S36 in FIG. 3 is NO.

**[0053]** The selection-candidate-list storage section 141 as shown in FIG. 2 is used in the above-described embodiment. However, as shown in FIG. 7, a selection-candidate-list storage section 141a may be used instead in which the index of the information selected by the user, the number of selection times and the deletion candidate flag are registered in association with one another. Use of such a selection-candidate-list storage section 141a, and performing the processing of updating the deletion candidate flag to "1" instead of processing of registering the element for which the selection probability p is less than the threshold $\mu$ in step S43 in Fig. 4 or step S56 in FIG. 5 allows the processing as detailed below instead of the processing of judging whether or not it is needed to update the selection-candidate-list storage section 141 based on whether or not the element is registered in the deletion-candidate-list storage section 142 in step S36. The processing of judging whether or not it is needed to update the selection-candidate-list storage section 141a is performed based on whether or not the element for which the deletion candidate flag is "1" exists in the selection-candidate-list storage section 141a, and update of the deletion candidate flag having a least number of selection times registered in the selection-candidate-list storage section 141a from "1" to "0" is performed instead of the processing of deleting the element having a least number of the selection times registered in the deletion-candidate-list storage section 142 in step S52 in FIG. 5.

In the above embodiment, when information is selected by the user, since the list management means increments the number of selection times of the selected information registered in the selection-candidate list, the information that is selected more frequently has a larger number of the selection times registered in the selection-candidate list. However, as to the information which is selected frequently in the past to have a larger number of selection times and yet is scarcely selected thereafter, the number of selection times thereof is gradually reduced by the decrement processing performed by the list management means. As a result, as for the information which is selected frequently in the past and yet is scarcely selected thereafter, the order of the presentation thereof is behind in the order of presentation.

In the above embodiment, the information which is selected frequently in the past and yet is scarcely selected thereafter for a long period of time can be positioned behind in the order of presentation. This is because there are provided the selection-candidate list in which the information selected by the user and the number of selection times are registered in pair, and the selection-candidate list that updates the selection-candidate list when information is selected by the user and decrements the each number of the selection times registered in the selection-candidate list when a decrement timing of the number of selection times occurs.

The configuration of the above embodiment can be applied to the cases of selecting the information to be used by the user from a large number of pieces of information, such as the case of: determining the destination address, to which the mail is frequently transmitted, from the candidate destination addresses in an E-mail transmission; determining the sender address, from which the mail is frequently received, from the sender addresses in an E-mail reception; determining the descending order of number of reference times of the received mails stored in the E-mail received area or the mails stored in the E-mail transmission area; determining the descending order of the reference times of the image files stored in the image storage area; determining the descending order of the usage of the applications installed; determining the destination address, to which the transmission is frequently performed, from the candidate destination addresses in a call transmission; determining the source address, from which the reception is frequently occurred, from the source addresses in a call reception; determining the bookmark, which is used frequently, from the bookmarks registered in the Internet communication.

As described heretofore, the present invention may employ the configurations as listed below.

It is sufficient that the decrement timing is a timing incurred by occurring of the selection by the user.

The information selected by the user is not registered in the selection-candidate list and the selection-candidate list is full, the list management means may perform a processing of replacing a pair including the information and a least number of selection times and stored in the selection-candidate list by another pair including the selected information and an initial value of the selection times under the condition that information for which a selection probability is lower than a threshold is registered in the selection-candidate list. In this case, the decrement timing may be a timing incurred by performing the processing of replacing as a momentum.

The list management means may: increment, if the information selected by the user is registered in the selection-candidate list, the selection times of the selected information; and add, if the selected information is not registered in the selection-candidate list and the selection-candidate list is full, the pair including the selected information and the initial value of the number of selection times to the selection-candidate list.

The selection probability of each piece of information registered in the selection-candidate list may be a ratio of the number of selection times of the each piece of information to a total of the numbers of selection times of the pieces of information stored in the selection-candidate list.

The configuration may be such that the system further includes a deletion-candidate list registering therein information for which a selection probability is lower than the threshold among the information registered in the selection-candidate list, and that if the information selected by the user is not registered in the selection-candidate list and the selection-candidate list is full, the list management means judges whether or not the selection-candidate list registers therein information for which the selection probability is less than the threshold base on whether or not information is registered in the deletion-candidate list.

While the invention has been particularly shown and described with reference to exemplary embodiment and modifications thereof, the invention is not limited to these embodiment and modifications. As will be apparent to those of ordinary skill in the art, various changes may be made in the invention without departing from the spirit and scope of the invention as defined in the appended claims.

This application is based upon and claims the benefit of priority from Japanese patent application No. 2006-323353 filed on November 30, 2006, the disclosure of which is incorporated herein in its entirety by reference.

**Claims**

1. An information-selection assist system comprising:

   a selection-candidate list registering therein information selected by a user and a number of selection times of the information in pair;
   a list management means (12) that updates said selection candidate list when the information is selected by the user, and decrements each number of selection times registered in said selection-candidate list upon occurring of a decrement timing of the number of selection times; and
   a selection-candidate presenting means (11) that presents the information registered in said selection-candidate list in a descending order of the number of selection times.

2. An information-selection assist system comprising:

   a selection-candidate list that is capable of registering therein a specified number of pairs each including information selected by a user and a number of selection times of the information;
   a list management means (12) that updates said selection-candidate list depending on necessity thereof when the information is selected by the user, and decrement each number of selection times registered in said selection-candidate list upon occurring of a decrement timing of the number of selection times; and
   a selection-candidate presenting means (11) that presents the information registered in said selection-candidate list in a descending order of the number of selection times.

3. The information-selection assist system according to claim 2, wherein said decrement timing is a timing incurred by occurring of the selection by the user.

4. The information-selection assist system according to claim 2, wherein:

if the information selected by the user is not registered in said selection-candidate list and said selection-candidate list is full, said list management means (12) performs a processing of replacing a pair including the information and a least number of selection and stored in said selection-candidate list by another pair including the selected information and an initial value of the selection times under the condition that information for which a selection probability is lower than a threshold is registered in said selection-candidate list; and
said decrement timing is a timing incurred by performing said processing of replacing as a momentum.

5. The information-selection assist system according to claim 4, wherein said list management means (12): increments, if the information selected by the use its registered in said selection-candidate list, the selection times of the selected information; and adds, if the selected information it not registered in said selection-candidate list and said selection-candidate list is full, the pair including the selected information and said initial value of the number of selection times to said selection-candidate list.

6. The information-selection assist system according to claim 5, wherein a selection probability of each piece of information registered in said selection-candidate list is a ratio of the number of selection times of said each piece of information to a total of the numbers of selection times of the pieces of information stored in said selection-candidate list.

7. The information-selection assist system according to claim 6, further comprising a deletion-candidate list registering therein information for which a selection probability is lower than said threshold among the information registered in said selection-candidate list,
wherein if the information selected by the user is not registered in said selection-candidate list and said selection-candidate list is full, said list management means (12) judges whether or not said selection-candidate list registers therein information for which said selection probability is less than said threshold base on whether or not information is registered in said deletion-candidate list.

8. An information-selection assist method comprising:

providing a selection-candidate list registering therein information selected by a user and a number of selection times of the selected information in pair;
a list management means (12) updating said selection-candidate list when information is selected by the user, and decrementing each number of selection times registered in said selection-candidate list;
a selection-candidate presenting means (11) presenting the information registered in said selection-candidate list in a descending order of the number of selection times.

9. An information-selection assist method comprising:

providing a selection-candidate list that is capable of registering therein information selected by a user and a number of selection times of the selected information in pair;
a list management means (12) updating said selection-candidate list depending on necessity thereof when the information is selected by the user, and decrementing each number of selection times registered in said selection-candidate list upon occurring of a decrement timing of the number of selection times; and
a selection-candidate presenting means (11) presenting the information registered in said selection-candidate list in a descending order of the number of selection times.

10. The information-selection assist method according to claim 9, wherein said decrement timing is a timing incurred by selection by the user as a momentum.

11. The information-selection assist method according to claim 9, further comprising:

if the information selected by the user is not registered in said selection-candidate list and said selection-candidate list is full, performing the processing of replacing a pair including the information and a least number of selection times and stored in said selection-candidate list by another pair including the selected information and an initial value of the selection times under the condition that information for which a selection probability is lower than a threshold is registered in said selection-candidate list, wherein:
said decrement timing is a timing incurred by performing said replacement processing.

12. The information-selection assist method according to claim 11, wherein said list management means (12): increments, if the information selected by the user is registered in said selection-candidate list, the selection times of the selected information; and adds, if the selected information is not registered in said selection-candidate list and said selection-candidate list is full, the pair including the selected information and said initial value of the number of selection times.

13. The information-selection assist method according to claim 12, wherein a selection probability of each piece of information registered in said selection-candidate list is a ratio of the number of selection times of said each piece of information to a total of the numbers of selection times of the pieces of information stored in said selection-candidate list.

14. The information-selection assist system according to claim 13, further comprising providing a deletion-candidate list registering therein information for which said selection probability is lower than said threshold among the information registered in said selection-candidate list;
wherein if the information selected by the user is not registered in said selection-candidate list and said selection-candidate list is full, said list management means (12) judging whether or not said selection-candidate list registers therein information for which said selection probability is less than said threshold information based on whether or not information is registered in said deletion-candidate list.

15. A program that causes a computer including a selection-candidate list registering information selected by a user and a number of selection times of the selected information in pair, to function as:

    a list management means (12) that updates said selection candidate list when the information is selected by the user, and decrements each number of selection times registered in said selection-candidate list upon occurring of a decrement timing of the number of selection times; and
    a selection-candidate presenting means (11) that presents the information registered in said selection-candidate list in a descending order of the number of selection times.

16. A program that causes a computer including a selection-candidate list registering information selected by a user and a number of selection times of the selected information in pair, to function as:

    a list management means (12) that updates said selection-candidate list depending on necessity thereof when the information is selected by the user, and decrements each number of selection times registered in said selection-candidate list upon occurring of a decrement timing of the number of selection times; and
    a selection-candidate presenting means (11) that presents the information registered in said selection-candidate list in a descending order of the number of selection times.

17. The program according to claim 16, wherein said decrement timing is a timing incurred by selection of the information by the user as a momentum.

18. The program according to claim 16, wherein:

    if the information selected by the user is not registered in said selection-candidate list and said selection-candidate list is full, said list management means (12) performs the processing of replacing a pair including the information and a least number of selection times and stored in said selection-candidate list by another pair including the selected information and an initial value of the selection times under the condition that information for which a selection probability is lower than a threshold is registered in said selection-candidate list; and
    said decrement timing is a timing incurred by performing said replacement processing as a momentum.

19. The program according to claim 18, wherein said list management means (12): increment, if the information selected by the user is registered in said selection-candidate list, the selection times of the selected information; and adds, if the selected information is not registered in said selection-candidate list and said selection-candidate list is full, the pair including the selected information and said initial value of the number of selection times to said selection-candidate list.

**20.** The program according to claim 19, wherein said selection probability of each piece of information registered in said selection-candidate list is a ratio of the number of selection times of said each piece of information to a total of the numbers of selection times of the pieces of information stored in said selection-candidate list.

**21.** The program according to claim 20, wherein said computer further comprises a deletion-candidate list registering therein information for which said selection probability is lower than said threshold among the information registered in said selection-candidate list;

wherein if the information selected by the user is not registered in said selection-candidate list and said selection-candidate list is full, said list management means (12) judges whether or not said selection-candidate list registers therein information for which said selection probability is less than said threshold information based on whether or not information is registered in said deletion-candidate list.

## FIG. 1

1 INFORMATION-SELECTION ASSIST SYSTEM

14 STORAGE UNIT

22

DISPLAY SECTION

INPUT SECTION

21

11

SELECTION-CANDIDATE PRESENTING MEANS

12

LIST MANAGEMENT MEANS

13

INFORMATION PRESENTING MEANS

141

SELECTION-CANDIDATE-LIST STORAGE SECTION

142

DELETION-CANDIDATE-LIST STORAGE SECTION

143

SELECTABLE-INFORMATION STORAGE SECTION

# FIG. 2

141 SELECTION-CANDIDATE-LIST
STORAGE SECTION

| INDEX | NUMBER OF SELECTION TIMES |
|-------|---------------------------|
| IN1 | 20 |
| IN5 | 25 |
| ⋮ | ⋮ |

# FIG. 3

```
    ( SELECTION-CANDIDATES
      DISPLAY REQUEST )
              │
              ▼
    ┌──────────────────────┐
    │ DISPLAY SELECTION-    │──── S31
    │ CANDIDATE-LIST SCREEN │
    └──────────────────────┘
              │
              ▼
    ┌──────────────────────┐
    │ SELECT INFORMATION TO BE │──── S32
    │ USED                 │
    └──────────────────────┘
              │
              ▼
    ┌──────────────────────────┐
    │ REFER TO SELECTION-CANDIDATE- │──── S33
    │ LIST STORAGE SECTION     │
    └──────────────────────────┘
              │
              ▼
         S34
      ◇ SELECTED INFORMATION ◇ ──── YES ──────────────┐
      ◇ REGISTERED ?        ◇                          │
              │ NO                                      │
              ▼                                         │
           S36                                          │
      ◇ UPDATE          ◇                              │
  NO ◇ SELECTION-CANDIDATE- ◇                          │
 ┌──◇ LIST STORAGE       ◇                             │
 │  ◇ SECTION ?          ◇                             │
 │         │ YES   S37                        S35      │
 │         ▼                                           ▼
 │  ┌──────────────────┐         ┌──────────────────┐
 │  │ SECOND UPDATE    │         │ FIRST UPDATE     │
 │  │ PROCESSING       │         │ PROCESSING       │
 │  └──────────────────┘         └──────────────────┘
 │         │                              │
 └─────────┼──────────────────────────────┘
           ▼
       ( END )
```

14

# FIG. 4

FIRST UPDATE PROCESSING

INCREMENT NUMBER OF SELECTION
TIMES OF SELECTED INFORMATION — S41

CALCULATE SELECTION PROBABILITY p
OF EACH PIECE OF INFORMATION — S42

REGISTER ELEMENT FOR WHICH
SELECTION PROBABILITY p IS LOWER
THAN THRESHOLD $\mu$ INTO DELETION-
CANDIDATE LIST STORAGE SECTION — S43

# FIG. 5

SECOND UPDATE PROCESSING

S51
NUMBER OF
ELEMENTS IN
SELECTION-CANDIDATE
LIST < N ?

YES

NO

DELETE ELEMENT FROM
DELETION-CANDIDATE LIST AND
SELECTION-CANDIDATE LIST
— S52

UPDATE NUMBER-OF-SELECTION-
TIMES count OF EACH ELEMENT IN
SELECTION-CANDIDATE LIST
count ← max (1, count-min_cnt)
— S53

ADD SELECTED INFORMATION AND
NUMBER-OF-SELECTION-TIMES
count TO SELECTION-CANDIDATE LIST
— S54

CALCULATE SELECTION PROBABILITY p
OF EACH PIECE OF INFORMATION
— S55

REGISTER ELEMENT FOR WHICH
SELECTION PROBABILITY p IS LESS
THAN $\mu$ INTO DELETION-CANDIDATE LIST
— S56

16

# FIG. 6

61

SELECT INDEX OF INFORMATION TO BE USED

62 — ☐ IN123

62 — ☐ IN5

62 — ☐ IN100

⋮

62 — ☐ IN1

| DECISION | | LIST |

63          64

# FIG. 7

141a SELECTION-CANDIDATE-LIST
STORAGE SECTION

| INDEX | NUMBER OF SELECTION TIMES | DELETION-CANDIDATE FLAG |
|-------|---------------------------|-------------------------|
| IN1 | 20 | "0" |
| IN5 | 25 | "0" |
| IN7 | 2 | "1" |
| ⋮ | ⋮ | ⋮ |

## INTERNATIONAL SEARCH REPORT

| | International application No. |
|---|---|
| | PCT/JP2007/072341 |

**A. CLASSIFICATION OF SUBJECT MATTER**
*G06F3/048*(2006.01)i, *G06F3/14*(2006.01)i

According to International Patent Classification (IPC) or to both national classification and IPC

**B. FIELDS SEARCHED**

Minimum documentation searched (classification system followed by classification symbols)
G06F3/048, G06F3/14

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2008 |
| Kokai Jitsuyo Shinan Koho | 1971–2008 | Toroku Jitsuyo Shinan Koho | 1994–2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 04-256117 A (Hitachi, Ltd.), | 1-3,8-10, 15-17 |
| | 10 September, 1992 (10.09.92), | |
| Y | Par. Nos. [0027] to [0036]; Figs. 1, 3, 5, 9 (Family: none) | 4-7,11-14, 18-21 |
| Y | JP 2000-029595 A (Fujitsu Ltd.), 28 January, 2000 (28.01.00), Par. Nos. [0001] to [0078]; all drawings & WO 00/04438 A1 & EP 1111496 A1 | 4-7,11-14, 18-21 |
| Y | JP 08-063321 A (Hitachi, Ltd.), 08 March, 1996 (08.03.96), Full text; all drawings (Family: none) | 6-7,13-14, 20-21 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 January, 2008 (15.01.08) | 22 January, 2008 (22.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9081357 A
- JP 2006323353 A